# EUROPEAN PATENT SPECIFICATION

(11) **EP 3 222 888 B1**
(45) Date of publication and mention of the grant of the patent: **28.11.2018**
(21) Application number: 17162696.3
(22) Date of filing: 24.03.2017
(51) Int. Cl.: F16H 59/10, B60K 20/02

(54) **SHIFT LEVER DEVICE**
SCHALTHEBELVORRICHTUNG
DISPOSITIF DE LEVIER DE VITESSES

(30) Priority: 25.03.2016 JP 2016061451
(43) Date of publication of application: 27.09.2017
(73) Proprietor: Fuji Kiko Co., Ltd., Shizuoka 431-0431 (JP)
(72) Inventor: ARAKAWA, Tetsuya, Kosai-shi, Shizuoka 431-0431 (JP)
(74) Representative: Grünecker Patent- und Rechtsanwälte PartG mbB

(56) References cited:
- DE-A1- 4 434 135
- JP-A- 2012 245 957
- US-A1- 2008 022 802

## Description

### Technical Field

The present invention relates to a shift lever device configured to shift a transmission installed in a vehicle.

### Background Art

Patent Literature 1 (Japanese Patent Application Publication No. 2008-30680) discloses a shift lever device which is capable of changing shift positions of a transmission in response to operation on a button provided to a knob of a shift lever.

In the knob of the shift lever device described in Patent Literature 1, the button is swingably supported by a button support member, and the button support member is attached to a knob main body. When the button support member is inserted from an opening provided to a one-side portion of the knob main body, an elastic fitting piece provided to an upper wall of the button support member is fitted into a fitting hole of the knob main body. Thereby, the button support member is retained in the knob main body. Document US 2008/0022802 A1 is a family member of above cited Patent Literature 1 and discloses a shift lever device according to the preamble of claim 1.

### Summary

The shift lever device described in Patent Literature 1 employs the structure in which when the button support member is inserted from the opening of the knob main body, the elastic fitting piece is fitted into the fitting hole. Thus, when the button receives an impact, the elastic fitting piece is easy to disengage from the fitting hole, and there is likelihood that: the button support member, together with the button, comes off the knob main body; and the retention of the button in the knob main body becomes insufficient.

With these problems taken into consideration, an object of the present invention is to more securely retain the button, provided to the knob, in the knob main body.

The present invention is a shift lever device including a knob provided to a tip end portion of a shift lever swingable around a base end portion thereof. The the knob includes a button configured to allow the shift lever to swing by being operated to be pressed, a button support member configured to movably support the button, a knob main body including a recessed portion in which the button support member is inserted and disposed, and a holding section configured to help the knob main body to hold the button support member inserted and disposed in the recessed portion. The holding section includes a fitting hole penetrating through a wall portion of the knob main body in a direction intersecting a direction in which the button support member is inserted into the recessed portion, a fitting hole portion provided to the button support member, and aligned to the fitting hole, and a fitting member inserted through the fitting hole and the fitting hole portion.

The present invention employs the structure in which the fitting member is inserted through the fitting hole of the knob main body and the fitting hole portion of the button support member. For this reason, the present invention makes it possible for the button support member to be more securely held by the knob main body, and for the button to be more securely prevented from coming off the knob main body.

### Brief Description of Drawings

Fig. 1 is a cross-sectional view of a shift lever, including a knob and a button, in a first embodiment of the present invention.
Fig. 2 is a cross-sectional view illustrating how the shift lever illustrated in Fig. 1 looks when the knob is operated to be pressed.
Fig. 3 is a cross-sectional view taken along the A-A line of Fig. 2.
Fig. 4 is a perspective view of the knob illustrated in Fig. 1.
Fig. 5 is an exploded perspective view of the knob illustrated in Fig. 4.
Fig. 6 is a cross-sectional view illustrating how the shift lever illustrated in Fig. 1 looks when a cap is detached from the shift lever.
Fig. 7 is a cross-sectional view illustrating how the shift lever illustrated in Fig. 3 looks when a cap is detached from the shift lever.

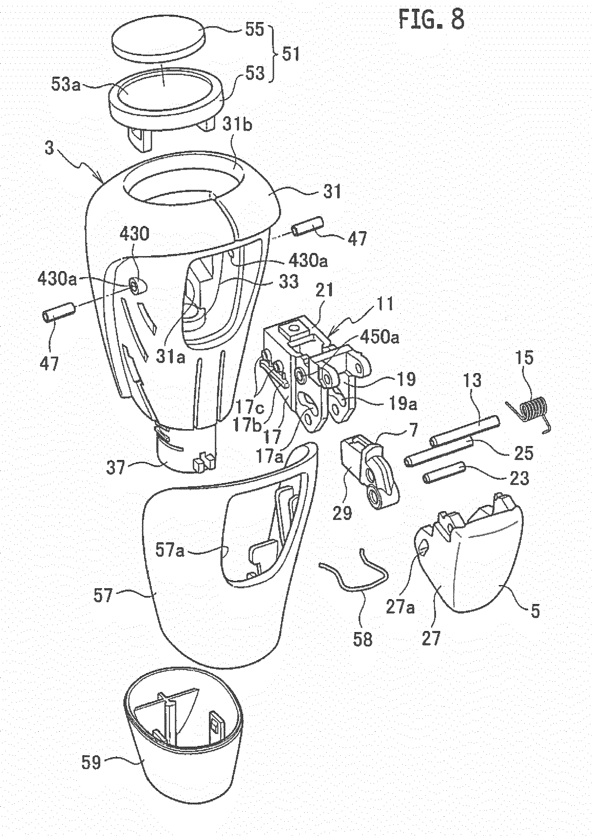

Fig. 8 is an exploded perspective view of a knob of a shift lever in a second embodiment of the present invention.

### Description of Embodiments

Embodiments of the present invention will be hereinbelow described based on the drawings.

### [First Embodiment]

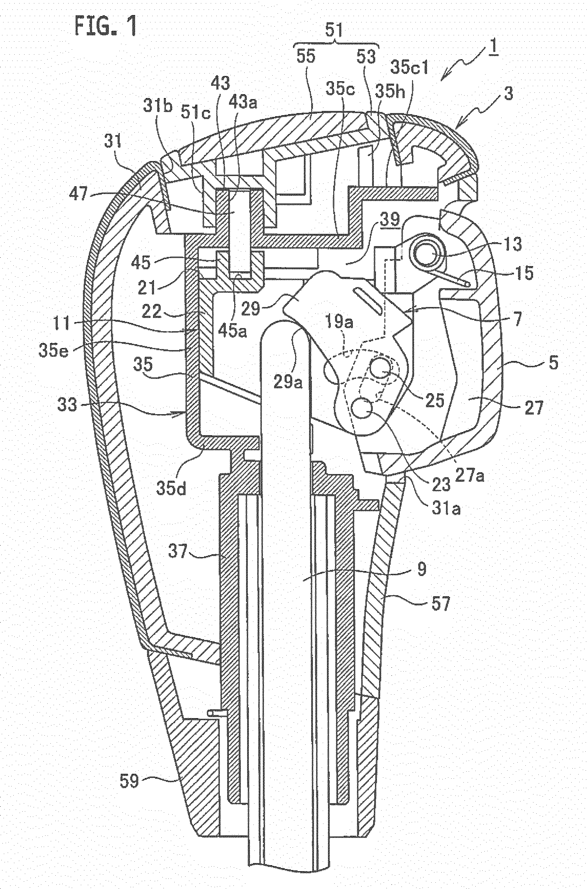

Figs. 1 to 5 illustrate a knob 3 provided to a tip end portion of a shift lever 1 in a shift lever device of a first embodiment of the present invention. The shift lever 1 swings around a base end portion thereof, albeit not illustrated, located on the lower side in Fig. 1 relative to a housing of the shift lever device, which is provided to the vehicle body, in forward and rearward directions of the vehicle. Thereby, the shift lever 1 performs a gear change of the transmission.

The knob 3 includes a covering section 31 serving as an external member. The covering section 31 includes an opening 31a formed in its side portion to the right in Fig. 1. A button 5 is provided at a position corresponding to the opening 31a. When the button 5 is pushed into the inside of the opening 31a by being pressed leftward in Fig. 1, the button 5 presses down a detent rod 9 via a link member 7.

The detent rod 9 is biased upward by a compression coil spring, albeit not illustrated. The detent rod 9 includes a detent pin, albeit not illustrated, at its base end-side portion located on the lower side in Fig. 1. The pushing down of the detent rod 9 disengages the detent pin from a detent hole provided in the housing which is provided to the vehicle body, and thereby allows the shift lever 1 to be swingably operated.

The button 5 is swingably supported by a button support pin 13 which is provided to a button support member 11 and oriented in a direction intersecting the opening 31a. The button 5 is biased by a torsion coil spring 15, wound around the button support pin 13, in a clockwise direction in Fig. 1, namely in a pressing direction of the button 5. The button support pin 13 is located near an upper end portion of the opening 31a. A lower end portion of the button 5 swings around the button support pin 13 in leftward and rightward directions in Fig. 1.

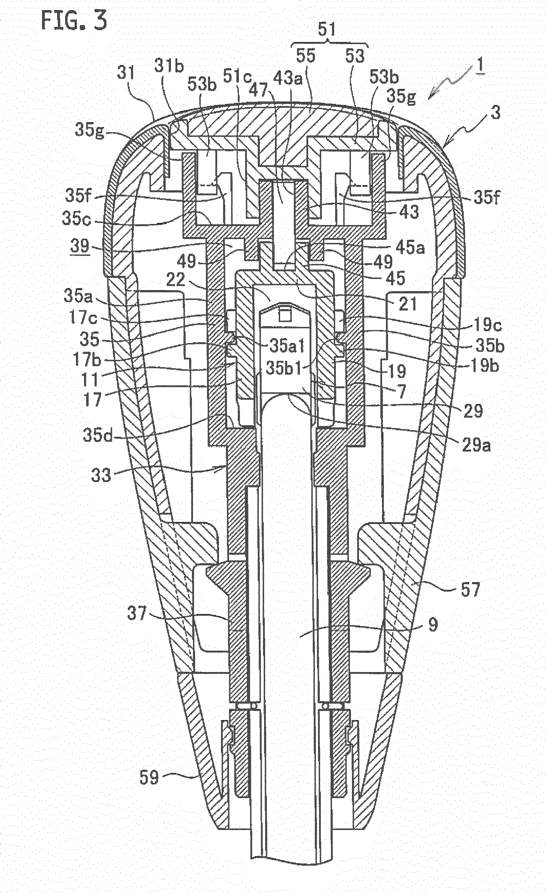

In Fig. 3, the button support member 11 includes left and right side walls 17, 19, an upper wall 21 and a rear wall 22, and a hollowed interior. As illustrated in Fig. 1, the link member 7 is turnably connected to the side walls 17, 19 near their lower end portions at the side of the opening 31a with the help of a link support pin 23. The link support pin 23 is parallel to the button support pin 13, and is located near a lower end portion of the link member 7 in the state illustrated in Fig. 1.

In Fig. 1, the link member 7 includes a connection pin 25 located at a position which is higher than the link support pin 23 and oblique toward the opening 31a. The connection pin 25 is parallel to the link support pin 23. Corresponding to the connection pin 25, an elongated hole 27a is provided in each side portion 27 of the button 5. The elongated hole 27a inclines such that its upper end portion is located closer to the opening 31a than its lower end portion. The two ends of the connection pin 25 are relatively movably inserted to the respective elongated holes 27a in a relatively movable manner.

The side walls 17, 19 of the button support member 11 are respectively provided with elongated holes 17a, 19a which allow the connection pin 25 to move inside the elongated holes 17a, 19a. The elongated holes 17a, 19a are shaped like an arc of a circle whose center is at the link support pin 23, and extend in a substantially left-right direction. The connection pin 25 moves inside the elongated holes 27a, 17a, 19a when the link member 7 turns around the link support pin 23 in response to the turn of the button 5 around the button support pin 13.

The link member 7 is configured such that its swingable portion 29, located on the opposite side of the link support pin 23 from the opening 31a, swings upward and downward relative to the button support member 11. The swingable portion 29 includes a contact surface 29a formed in its lower portion to come into contact with an upper end of the detent rod 9.

As discussed above, the torsion coil spring 15 biases the button 5 in the pressing direction. This biasing force makes the button 5 press the connection pin 25 in a direction opposite from the opening 31a (in the leftward direction in Fig. 1) with the help of the elongated holes 27a. Thereby, in Fig. 1, the link member 7 is pressed to turn around the link support pin 23 in a counterclockwise direction, namely in a direction in which the contact surface 29a comes into contact with the detent rod 9.

In this respect, an elastic force of a compression coil spring, albeit not illustrated, to press the detent rod 9 upward is set greater than that of the torsion coil spring 15 configured to press the button 5 toward the inside of the opening 31a. For this reason, while the button 5 is not operated to be pressed, the link member 7 locks the detent rod 9, as illustrated in Fig. 1, such that: the detent rod 9 moves upward due to the elastic force of the compression coil spring; and the link member 7 turns around the link support pin 23 in the clockwise direction.

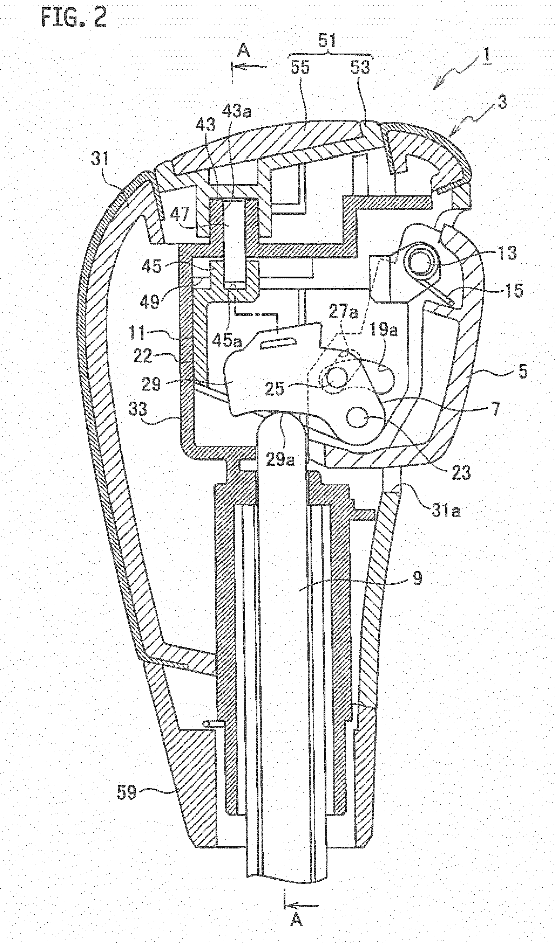

Once the button 5 is operated to be pressed while in the locked state illustrated in Fig. 1, the link member 7 turns around the link support pin 23 in the counterclockwise direction in Fig. 1. The turn of the link member 7 presses the detent rod 9 downward, and thereby unlocks the detent rod 9, as illustrated in Fig. 2. While in the unlocked state, the shift lever 1 is allowed to swing to perform the shift change.

The knob 3 further includes a base member 33, serving as a structural member, which is monolithically molded inside the covering section 31. The base member 33 retains the button support member 11. The base member 33 includes: an upper housing section 35 which the button support member 11 is housed and disposed in, and which is located in an upper portion of the base member 33; and a cylindrical lower housing section 37 which is located below the upper housing section 35, and in which the detent rod 9 is housed movably in its axial direction. The covering section 31 and the base member 33 jointly form the knob main body.

In Fig. 3, the upper housing section 35 includes left and right side walls 35a, 35b, an upper wall 35c and a lower wall 35d. The upper housing section 35 further includes a rear wall 35e which is located on the opposite side of the upper housing section 35 from the opening 31a. An opening 35a-side portion of the upper housing section 35, which is located on an opposite side of the upper housing section 35 from the rear wall 35e, is open. A space 39 as a hollow is formed inside the upper housing section 35. The space 39 as a whole is shaped substantially like a cube, and communicates with a space inside the lower housing section 37 in which the detent rod 9 is housed. From the opening 31a, the button support member 11 is inserted into the space 39 inside the base member 33.

An upward-projecting base member projection 43 shaped like a square prism is provided to the upper wall 35c at the center in the left-right direction in Fig. 3, and slightly leftward of the center axis of the detent rod 9 in Fig. 1. A circular fitting hole 43a is formed in a central portion of the base member projection 43 in such a way to penetrate through not only the base member projection 43 but also the upper wall 35c. In other words, the fitting hole 43a is formed in the upper wall 35c, serving as one wall portion of the knob main body, such that the fitting hole 43a penetrates through the upper wall 35c in a direction intersecting a direction in which the button support member 11 is inserted into the space 39. The shape of the base member projection 43 does not have to be the square prism, and may be a circular column.

A certain clearance is held between the upper wall 35c of the upper housing section 35 and the upper wall 21 of the button support member 11 which is inserted and disposed in the upper housing section 35. In this state, a support member projection 45 as a protrusion projecting into the fitting hole 43a in the upper wall 35c is provided to the upper wall 21 of the button support member 11 at a position corresponding to the base member projection 43. Like the base member projection 43, the support member projection 45 may be a square prism or a circular column. The support member projection 45 includes a fitting recessed portion 45a as a circular fitting hole portion, which is formed in a central portion of the support member projection 45.

The diameter of the fitting hole 43a and the diameter of the fitting recessed portion 45a are substantially equal to each other. From the fitting hole 43a, a fitting pin 47 as a fitting member is inserted into and fitted to the fitting hole 43a and the fitting recessed portion 45a. The fitting pin 47 is made from a spring pin, for example. Thereby, the button support member 11 is held by the base member 33, and is prevented from coming off the base member 33. The fitting hole 43a, the fitting recessed portion 45a and the fitting pin 47 jointly form a holding section which helps the base member 33 to hold the button support member 11 inserted and disposed in the space 39.

As illustrated in Fig. 3, the lower surface of the upper wall 35c of the base member 33 is provided with a pair of guide walls 49 as outer-side protrusions projecting downward. The guide walls 49 extend in a direction orthogonal to the sheet on which Fig. 3 is drawn. The guide walls 49 are located at the outer sides of the support member projection 45 which are to the left and right in Fig. 3. The guide walls 49 are substantially in contact with the outer side surfaces of the support member projection 45, respectively. The lower ends of the respective guide walls 49 are away from the upper wall 21.

As illustrated in Fig. 3, the side walls 17, 19 of the button support member 11 and the side walls 35a, 35b of the upper housing section 35 are away from each other with clearances formed in between. In the clearances, the side walls 17, 19 of the button support member 11 are provided with: lower guided portions 17b, 19b projecting toward the side walls 35a, 35b of the upper housing section 35; and upper guided portions 17c, 19c located above the lower guided portions 17b, 19b.

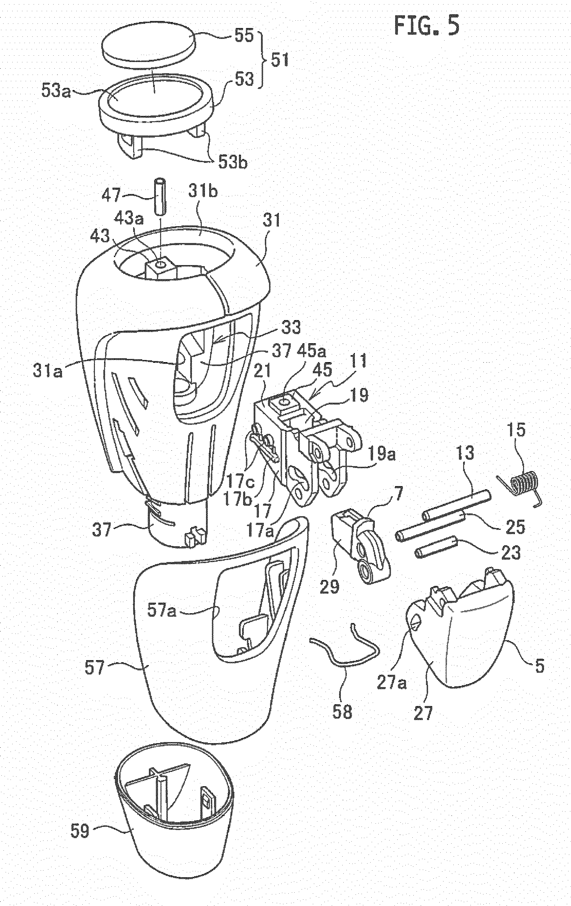

As illustrated in Fig. 5, the lower guided portions 17b, 19b are each shaped like a straight line which extends long in the direction in which the button support member 11 is inserted into the opening 31a. The upper guided portions 17c, 19c are each shaped like a circular column. Two upper guided portions 17c are provided side-by-side in a direction of the extension of the lower guided portion 17b, while two upper guided portions 19c are provided side-by-side in a direction of the extension of the lower guided portion 19b.

Meanwhile, in the above-mentioned clearances, the side walls 35a, 35b of the upper housing section 35 are provided with guide portions 35a1, 35b1 projecting toward the side walls 17, 19 of the button support member 11. The guide portions 35a1, 35b1 are each shaped like a straight line which extends long in the same direction as the lower guided portions 17b, 19b of the button support member 11 are. The guide portions 35a1, 35b1 are located between the lower guided portions 17b, 19b and the upper guided portions 17c, 19c.

As illustrated in Figs. 5 to 7, the covering section 31 includes an upper opening 31b formed in its upper surface to penetrate through the upper surface in a vertical direction. A cap 51 as a lid member is attached to the upper opening 31b. The cap 51 includes: a circular cap main body 53; and a disc-shaped design plate 55 fitted into a recessed portion 53a in the cap main body 53, and fixed to the cap main body 53 with an adhesive.

The cap main body 53 includes a pair of engagement portions 53b formed on the lower surface of the cap main body 53. The upper wall 35c of the base member 33 is provided with a pair of engagement claws 35f projecting upward. As illustrated in Fig. 3, when the engagement portions 53b come into engagement with the engagement claws 35f, the cap main body 53 is fixed to the base member 33.

As illustrated in Fig. 3, the engagement portions 53b are located at outer sides of the engagement claws 35f. In this state, support walls 35g projecting upward from the upper wall 35c of the base member 33 are located at positions which are on the opposite side of the engagement portions 53b from the engagement claws 35f. Since the support walls 35g are provided there, the state in which the engagement portions 53b and the engagement claws 35f are in engagement with each other is securely maintained.

The lower surface of the cap main body 53 is provided with a lower protrusion 51c formed surrounding the base member projection 43 of the base member 33. While the cap 51 is in a state of being attached to the upper opening 31b, the upper end of the base member projection 43 is in a state of being substantially in contact with the inner-side lower surface of the lower protrusion 51c with the lower end of the lower protrusion 51c away from the upper wall 35c.

As illustrated in Fig. 1, the upper wall 35c of the base member 33 includes a step portion 35c1 located near the opening 31a, and elevated from the upper wall 35c by being bent upward from the upper wall 35c to rise toward the upper opening 31b. A support protrusion 35h projecting upward is provided to the top of the step portion 35c1. While the cap 51 is in the state of being attached to the upper opening 31b, the lower surface of the cap main body 53 is in a state of being substantially in contact with the upper end of the support protrusion 35h, or in a state of being slightly away from the upper end of the support protrusion 35h.

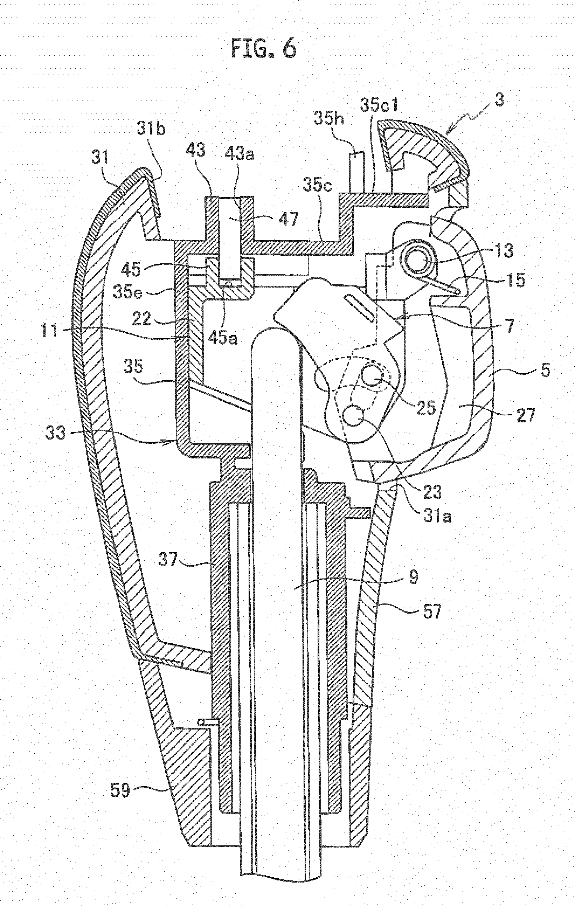

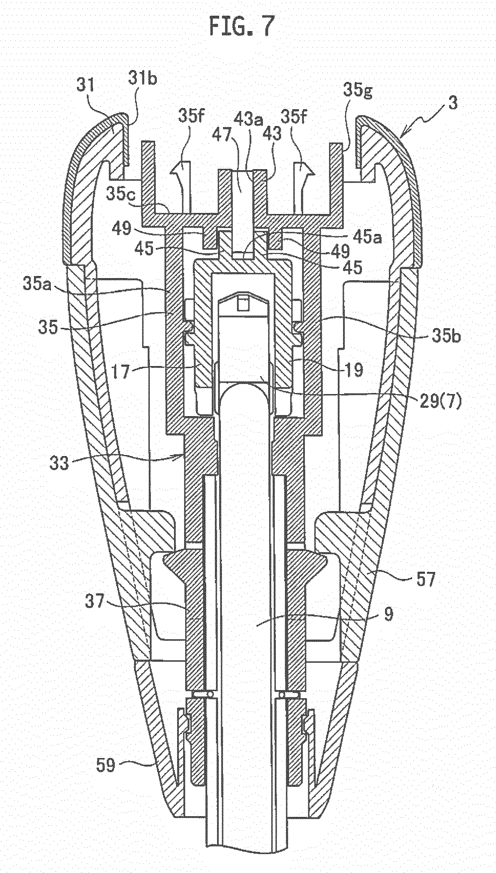

While the cap 51 is in a state of, as illustrated in Figs. 6 and 7, being detached from the upper opening 31b, the fitting pin 47 is inserted from the upper opening 31b of the covering section 31 into and fitted to the fitting hole 43a and the fitting recessed portion 45a. After the fitting pin 47 is attached, the cap 51 is attached to the upper opening 31b. Thereby, the holding section including the fitting hole 43a, the fitting recessed portion 45a and the fitting pin 47 is covered with the cap 51.

As illustrated in Fig. 5, a cover 57 is attached to an opening 31a-side portion of the covering section 31. The cover 57 includes a cover opening 57a which corresponds to the opening 31a. The lower housing section 37 of the base member 33 projects downward from the lower end of the covering section 31 to which the cover 57 is attached. A clip 58 is fitted to the portion of the base member 33 which projects from the covering section 31. A cylindrical cover 59 is attached to the portion thereof in a way to surround the portion.

The button 5, as well as the button support member 11 and the link member 7, which are mounted on the button 5, form a button assembly. Descriptions will be hereinbelow provided for a sequence for mounting the button assembly in the base member 33.

From the opening 31a illustrated in Fig. 5, the button assembly is inserted into the base member 33, which is formed integrally with the covering section 31, with the button support member 11 ahead of the rest of the button assembly in the inserting direction. While the button assembly is being inserted, the support member projection 45 of the button support member 11 is guided by the pair of guide walls 49 of the base member 33 between the guide walls 49. This guiding is achieved with the guide portions 35a1, 35b1 of the base member 33 getting in between the lower guided portions 17b, 19b and the upper guided portions 17c, 19c of the button support member 11.

While the button assembly is in a state of being completely inserted in the base member 33, the rear wall 22 of the button support member 11 is in contact with the rear wall 35e of the base member 33, as illustrated in Fig. 6. In this case, the fitting recessed portion 45a of the button support member 11 is aligned to the fitting hole 43a of the base member 33. In this state, the fitting pin 47 is sequentially inserted into and fitted to the fitting hole 43a and the fitting recessed portion 45a. Thereby, the button support member 11 is mounted in the base member 33, and is retained in the base member 33.

The knob 3 of the shift lever 1 of the embodiment includes: the fitting hole 43a provided to the upper wall 35c of the base member 33; the fitting recessed portion 45a provided to the button support member 11; and the fitting pin 47 inserted in the fitting hole 43a and the fitting recessed portion 45a. The fitting hole 43a, the fitting recessed portion 45a and the fitting pin 47 jointly serve as the holding section.

In this case, the fitting hole 43a penetrates through the base member projection 43 and the upper wall 35c in the orthogonal direction intersecting the direction in which the button support member 11 is inserted into the space 39 of the base member 33, and the fitting recessed portion 45a is aligned to the fitting hole 43a. Thus, the insertion of the fitting pin 47 through the fitting hole 43a and the fitting recessed portion 45a makes it possible to inhibit the button support member 11 from coming off the base member 33, and to more securely retain the button 5, supported by the button support member 11, in the base member 33.

In the embodiment, while the button assembly in which the button support member 11 and the link member 7 are mounted on the button 5, is being inserted into the space 39 of the base member 33, the support member projection 45 of the button support member 11 is guided by the pair of guide walls 49 of the base member 33 between the guide walls 49. This guidance increases the ease at which the button assembly is mounted in the base member 33. In addition, after the button assembly is inserted into and mounted in the base member 33, the support member projection 45 of the button support member 11 is held by the pair of guide walls 49 of the base member 33, as illustrated in Fig. 3. This increases the reliability of holding the base member 33 in the left-right direction orthogonal to the inserting direction.

In the embodiment, the guide walls 49 are formed from the projecting portions projecting from the upper wall 35c of the base member 33 in a way to surround the outer circumference of the support member projection 45. To this end, the embodiment employs the simple configuration in which the guide walls 49 are formed integrally with the base member 33 in a way to project from the upper wall 35c of the base member 33. Using this simple configuration, it is possible to enhance the effects of guiding and holding the support member projection 45 of the base member 33.

In the embodiment, the cap 51 configured to cover the holding section including the fitting pin 47 and the like is attached to the base member 33. Since the holding section including the fitting pin 47 and the like is covered with the cap 51, this structure requires the fitting pin 47 to be attached from the outside of the covering section 31, but in spite of that inhibits a decrease in the external appearance quality.

### [Second Embodiment]

Fig, 8 illustrates a second embodiment of the present invention, and is a perspective view corresponding to Fig. 5. In the second embodiment, components which are the same as or similar to those in the first embodiment will be denoted by the same or similar reference signs. Descriptions will be provided for components which are different from those in the first embodiment. What makes the second embodiment different from the first embodiment is that the holding section configured to help the base member 33 to hold the button support member 11 is provided to a side portion of the knob 3.

Circular fitting holes 430a through which to insert the fitting pins 47 are respectively provided to two sides of the portion of the covering section 31 to which the cover 57 is attached with the opening 31a interposed between the two sides. The fitting holes 430a are respectively provided to the central portions of cylindrical covered portion projections 430 projecting from the external surface of the covering section 31 in a way that allows the fitting holes 430a to penetrate through the covering section 31.

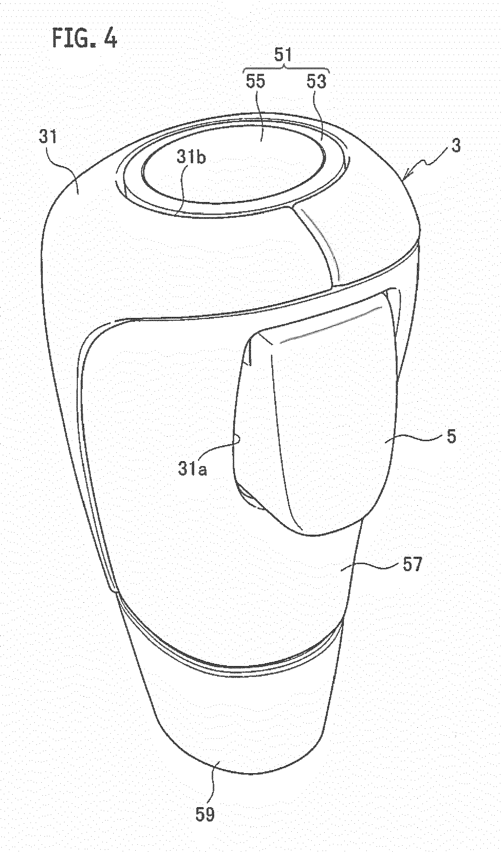

Corresponding to the fitting holes 430a, circular fitting recessed portions 450a are respectively formed in the side walls 17, 19 of the button support member 11. The diameter of the fitting holes 430a and the diameter of the fitting recessed portions 450a are substantially equal to each other. Once the button support member 11 is inserted into the base member 33 like in the embodiment illustrated in Fig. 4, the fitting pins 47 are inserted into and fitted to the fitting holes 430a and the fitting recessed portions 450a. After the fitting pins 47 are fitted to the fitting holes 430a and the fitting recessed portions 450a, the cover 57 is attached to an opening 31a-side portion of the covering section 31.

In this case, the fitting holes 430a penetrate through the covering section 31 in a direction intersecting the direction in which the button support member 11 is inserted into the space 39, and the fitting recessed portions 450a are aligned to the fitting holes 430a. Thus, like in the first embodiment, the insertion of the fitting pins 47 through the fitting holes 430a and the fitting recessed portions 450a makes it possible to inhibit the button support member 11 from coming off the base member 33, and to more securely retain the button 5, supported by the button support member 11, in the base member 33.

In the second embodiment, too, the holding section including the fitting pin 47 and the like is covered with the cover 57. Although this structure requires the fitting pin 47 to be attached from the outside of the covering section 31, the structure inhibits a decrease in the external appearance quality in exchange.

Although the foregoing descriptions have been provided for the embodiments of the present invention, the embodiments are presented just as examples for the purpose of making the present invention easy to understand. The present invention is not limited to these embodiments. The technical scope of the present invention covers not only the specific technical matters disclosed in the embodiments, but also modifications, changes, alternative techniques and the like which can be easily derived from the technical matters.

For example, the structure of the holding section including the fitting pin 47 and the like may be that obtained by choosing the best things from the first and second embodiments. Furthermore, the fitting holes 43a, 430a and the fitting recessed portions 45a, 450a do not have to be circular, and may be polygonal such as square.

## Claims

1. A shift lever device comprising a knob (3) provided to a tip end portion of a shift lever (1) swingable around a base end portion thereof, wherein
the knob (3) includes
a button (5) configured to allow the shift lever (1) to swing by being operated to be pressed,
a button support member (11) configured to movably support the button (5),
a knob main body (33) including a recessed portion (39) in which the button support member (11) is inserted and disposed, and
a holding section configured to help the knob main body (33) to hold the button support member (11) inserted and disposed in the recessed portion (39),
**characterised in that**
the holding section includes
a fitting hole (43a, 430a) penetrating through a wall portion of the knob main body (33) in a direction intersecting a direction in which the button support member (11) is inserted into the recessed portion (39),
a fitting hole portion (45a, 450a) provided to the button support member (11), and aligned to the fitting hole (43a, 430a), and
a fitting member (47) inserted through the fitting hole (43a, 430a) and the fitting hole portion (45a, 450a).

2. The shift lever device according to claim 1, wherein
the fitting hole portion (45a, 450a) of the button support member (11) is formed in a protrusion (45) projecting toward the fitting hole (43a, 430a), and
the knob main body (33) is provided with outer-side protrusions (49) at two sides thereof across the protrusion (45) in the direction intersecting the direction in which the button support member (11) is inserted into the recessed portion (39), the outer-side protrusions (49) configured to be in contact with the protrusion (45).

3. The shift lever device according to claim 1 or 2, wherein
a lid member (51, 57) configured to cover the holding section is attached to the knob main body (33).

## Patentansprüche

1. Eine Schalthebelvorrichtung umfassend einen Knauf (3), der an einer Spitze eines Endabschnitt eines Schalthebels (1) vorgesehen ist, der um einen Basisendabschnitt davon schwenkbar ist, wobei
der Knauf (3) umfasst
einen Knopf (5), der so konfiguriert ist, dass der Schalthebel (1) schwingt, um durch Betätigen gedrückt zu werden,
ein Knopfstützelement (11), das so konfiguriert ist, dass es den Knopf (5) beweglich stützt,
einen Knaufhauptkörper (33), der einen ausgesparten Abschnitt (39) umfasst, der in das Knopfstützelement (11) eingeführt und angeordnet ist, und
einen Halteabschnitt, der so konfiguriert ist, dass er den Knaufhauptkörper (33) unterstützt, das Knopfhalteelement (11), das in den ausgesparten Abschnitt (39) eingesetzt und angeordnet ist, zu halten,
**dadurch gekennzeichnet, dass**
der Halteabschnitt umfasst:
ein Passloch (43a, 430a), das einen Wandabschnitt des Knaufhauptkörpers (33) in einer Richtung durchdringt, die eine Richtung schneidet, in der das Knopfstützelement (11) in den ausgesparten Abschnitt (39) eingeführt ist,
ein Passlochabschnitt (45a, 450a), der an dem Knopfstützelement (11) vorgesehen ist und auf das Passloch (43a, 430a) ausgerichtet ist, und
ein Passelement (47), das durch das Passloch (43a, 430a) und den Passlochabschnitt (45a, 450a) eingeführt ist.

2. Die Schalthebelvorrichtung nach Anspruch 1, wobei
der Passlochabschnitt (45a, 450a) des Knopfstützelements (11) ist in einem Vorsprung (45) ausgebildet, der in Richtung des Passlochs (43a, 430a) vorsteht, und
der Knaufhauptkörper (33) mit außenseitigen Vorsprüngen (49) an zwei Seiten davon über den Vorsprung (45) in der Richtung versehen ist, die die Richtung schneidet, in der das Knopfstützelement (11) in den ausgesparten Abschnitt (39) eingesetzt ist, wobei die außenseitigen Vorsprünge (49) so konfiguriert sind, dass sie in Kontakt mit dem Vorsprung (45) stehen.

3. Die Schalthebelvorrichtung nach Anspruch 1 oder 2, wobei ein Deckelelement (51, 57), das konfiguriert ist, um den Halteabschnitt abzudecken, der an dem Knaufhauptkörper (33) angebracht ist.

## Revendications

1. Dispositif de levier de changement de vitesse comprenant un pommeau (3) situé sur une partie d'extrémité de pointe d'un levier de changement de vitesse (1) pouvant pivoter autour d'une partie d'extrémité de base dudit levier, dans lequel
le pommeau (3) comprend
un bouton (5) conçu de sorte que son actionnement par pression permette au levier de vitesse (1) de pivoter,
un élément de support de bouton (11) conçu pour supporter de manière mobile le bouton (5),
un corps principal de pommeau (33) comportant une partie évidée (39) dans laquelle l'élément de support de bouton (11) est inséré et disposé, et
une section de maintien conçue pour aider le corps principal de pommeau (33) à maintenir l'élément de support de bouton (11) inséré et disposé dans la partie évidée (39),
**caractérisé en ce que** la section de maintien comprend
un trou d'assemblage (43a, 430a) qui traverse une partie de paroi du corps principal de pommeau (33) dans une direction coupant une direction dans laquelle l'élément de support de bouton (11) est inséré dans la partie évidée (39),
une partie de trou d'assemblage (45a, 450a) située sur l'élément de support de bouton (11) et alignée avec le trou d'assemblage (43a, 430a), et
un élément d'assemblage (47) inséré à travers le trou d'assemblage (43a, 430a) et la partie de trou d'assemblage (45a, 450a).

2. Dispositif de levier de changement de vitesse selon la revendication 1, dans lequel
la partie de trou d'assemblage (45a, 450a) de l'élément de support de bouton (11) est formée dans une saillie (45) avançant en direction du trou d'assemblage (43a, 430a), et
le corps principal de pommeau (33) est pourvu de saillies de côté extérieur (49) sur deux côtés de part et d'autre de la saillie (45) dans la direction coupant la direction dans laquelle l'élément de support de bouton (11) est inséré dans la partie évidée (39), les saillies de côté extérieur (49) étant conçues pour être en contact avec la saillie (45).

3. Dispositif de levier de changement de vitesse selon la revendication 1 ou 2, dans lequel
un élément formant couvercle (51, 57) conçu pour couvrir la section de maintien est fixé sur le corps principal de pommeau (33).
